(19) Europäisches Patentamt
European Patent Office
Office européen des brevets

(11) **EP 3 346 394 A1**

(12) **EUROPEAN PATENT APPLICATION**
published in accordance with Art. 153(4) EPC

(43) Date of publication:
**11.07.2018 Bulletin 2018/28**

(51) Int Cl.:
*G06F 17/30* (2006.01)    *G06N 5/02* (2006.01)
*G06N 99/00* (2010.01)

(21) Application number: **16841689.9**

(22) Date of filing: **26.08.2016**

(86) International application number:
**PCT/JP2016/074903**

(87) International publication number:
**WO 2017/038657 (09.03.2017 Gazette 2017/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.08.2015 JP 2015170923**

(71) Applicant: **National Institute of Information
and Communication Technology
Tokyo 184-8795 (JP)**

(72) Inventors:
• **OH, Jonghoon
  Koganei-shi
  Tokyo 184-8795 (JP)**

• **TORISAWA, Kentaro
  Koganei-shi
  Tokyo 184-8795 (JP)**
• **HASHIMOTO, Chikara
  Koganei-shi
  Tokyo 184-8795 (JP)**
• **IIDA, Ryu
  Koganei-shi
  Tokyo 184-8795 (JP)**
• **TANAKA, Masahiro
  Koganei-shi
  Tokyo 184-8795 (JP)**
• **KLOETZER, Julien
  Koganei-shi
  Tokyo 184-8795 (JP)**

(74) Representative: **Vossius & Partner
Patentanwälte Rechtsanwälte mbB
Siebertstrasse 3
81675 München (DE)**

(54) **QUESTION ANSWERING SYSTEM TRAINING DEVICE AND COMPUTER PROGRAM THEREFOR**

(57)    [Object] An object is to provide a why-question answering system training device generating training data for a classifier with high efficiency with minimum human labor.

[Solution] A training device 62 includes: a question issuing unit 100 issuing a question stored in a question and expected answer storage unit 76 to a question answering system 60; an answer candidate filtering unit 102, an answer candidate determining unit 104, training data generating/labeling unit 106, and a training data selecting unit 108, generating and adding to a training data storage unit 64 training data for a ranking unit 122 of question answering system 60, from pairs of a question and each of a plurality of answer candidates output with scores from why-question answering system 60; and an iteration control unit 110 controlling question issuing unit 100, answer candidate filtering unit 102, answer candidate determining unit 104, training data generating/labeling unit 106 and training data selecting unit 108 such that training of the training device, issuance of question and addition of training data are repeated until an end condition is satisfied.

Fig. 2

## Description

TECHNICAL FIELD

The present invention relates to question answering systems and, more specifically, to a technique of improving precision of answers to "why-questions" in question-answering systems.

BACKGROUND ART

For human beings, when a question arises, finding an answer to the question is one of basic activities. For example, to a question "why we get cancer?" various efforts have been made to find its answer. Meanwhile, development of computers enabled them to do various activities, which have been done by humans, with higher performance than that of humans, such as memorizing things and facts and retrieving targeted information at high speed.

Conventionally, however, searching for an answer to a "why-question" by a computer has been considered a quite difficult task. Here, a "why-question" is a question asking the reason why some event occurs such as "Why a man suffers from a cancer?", and finding an answer to it by a computer is referred to as a "why-question answering."

In the meantime, along with the developments of computer hardware and software, techniques for finding an answer to a "why-question" by a method or methods which differ from those used by humans to find an answer to a "why-question" are studied. These studies belong to technical fields such as so-called artificial intelligence, natural language processing, web mining, and data mining.

In this regard, the applicant of the present invention has a question answering service, which is publicly available on the Internet, as an example of question answering systems. This question answering system implements a why-question answering system as one component. This why-question answering system uses a technique disclosed in Patent Literature 1 as specified below.

In this why-question answering system, a huge amount of documents are collected in advance from the Web, and a huge amount of causality expressions are extracted therefrom, focusing on vocabularies representing causality relations. Here, a causality expression means such an expression wherein a phrase representing a cause and a phrase representing a result are connected by a specific word or words. Upon reception of a "why-question," the system collects expressions having result portions common to the question sentence from the huge amount of causality expressions, and extracts phrases representing causes thereof as answer candidates. Since a huge number of such answer candidates can be obtained, the system uses a classifier for selecting from the candidates those apt as answers to the question.

The classifier is trained by supervised learning, using lexical features (word sequence, morpheme sequence, etc.), structural features (partial syntactic tree etc.), and semantic features (meanings of words, evaluation expressions, causal relations, etc.) of text.

CITATION LIST

PATENT LITERATURE

    PTL 1: JP2015-011426A
    PTL2: JP2013-175097A

SUMMARY OF INVENTION

TECHNICAL PROBLEM

Though the above-described conventional why-question answering system delivers decent performance using the classifier, there is still room for improvement. For improving performance, what is necessary is to train the classifier using a greater amount of suitable training data. Conventionally, however, the training data has been prepared manually and hence, its cost has been prohibitive to prepare a huge amount of training data. Further, it has been unclear what type of training data should be selected to enable efficient training of the classifier. Therefore, a technique that enables more efficient training of classifiers and thereby improves performance of the classifiers has been desired.

Therefore, an object of the present invention is to provide a device for training a why-question answering system that enables training by preparing training data for the classifier with high efficiency with least possible manual labor.

SOLUTION TO PROBLEM

According to a first aspect, the present invention provides a question answering system training device, used with causality expression storage means for storing a plurality of causality expressions, question and expected answer storage means for storing sets each including a question and an expected answer to the question extracted from one same causality expression stored in the causality expression storage means, and a question answering system outputting, upon reception of a question, a plurality of answer candidates to the question with scores, for improving performance of a classifier that scores the answer candidates in the question answering system. The training device is used also with a learning device including training data storage means for training the classifier of the question answering system. The training device includes: learning device control means controlling the learning device such that learning of the classifier is performed using the training data stored in the training data storage means; question issuing means issuing and giving to the question answering system a question stored in the question and expected answer storage means; training data adding means for generating training data for the classifier of the question answering system, from pairs of the question issued by the question issuing means and each of a plurality of answer candidates output with scores from the question answering system in response to the question, and adding the training data to the training data storage means; and iteration control means for controlling the learning device control means, the question issuing means, and the training data adding means such that control of the learning device by the learning data control means, issuance of a question by the question issuing means, and addition of the training data by the training data adding means are repeatedly executed for a prescribed number of times until a prescribed end condition is satisfied.

Preferably, the training data adding means includes: answer candidate selecting means for selecting, from a plurality of answer candidates output with scores from the question answering system in response to a question issued by the question issuing means, a prescribed number of answer candidates having highest scores with absolute value of each score being smaller than a positive first threshold value; training data candidate generating means calculating degree of matching between each of the prescribed number of answer candidates selected by the answer candidate selecting means and the expected answer to the question, and depending on whether the degree of matching is larger than a second threshold value or not, labeling the answer candidate and the question as a positive example and a negative example, respectively, thereby for generating a training data candidate; and means for adding the training data candidate generated by the training data candidate generating means as new training data, to the training data storage means.

More preferably, the training data adding means further includes first answer candidate discarding means provided between an output of the answer candidate selecting means and an input of the training data candidate generating means, for discarding, of the answer candidates selected by the answer candidate selecting means, an answer candidate derived from a causality expression from which a question as a source of the answer candidate has been derived.

Further preferably, the training data adding means further includes second answer candidate discarding means provided between an output of the answer candidate selecting means and an input of the training data candidate generating means, for discarding, of pairs of the question and the answer candidates selected by the answer candidate selecting means, a pair that matches any pair stored in the training data storage means.

The training data adding means may include training data selecting means for selecting only a prescribed number of training data candidates of which answer candidates have highest scores included in the training data candidates, which is a part of the training data candidates generated by the training data candidate generating means, as new training data, and adding them to the training data storage means.

Further, the question answering system may extract answer candidates from a set of passages, each passage being comprised of a plurality of sentences and including at least a cue phrase for extracting a causality expression.

According to a second aspect, the present invention provides a computer program causing a computer to function as a question answering system training device, used with causality expression storage means for storing a plurality of causality expressions, question and expected answer storage means for storing sets of a question and an expected answer to the question extracted from one same causality expression stored in the causality expression storage means, and a question answering system outputting, upon reception of a question, a plurality of answer candidates to the question with scores, for improving performance of a classifier that scores the answer candidates in the question answering system. The training device is used also with a learning device including training data storage means for training the classifier of the question answering system. The question and the expected answer forming the set are generated from the same causality expression. The computer program causes the computer to function as various means forming any of the training devices described above.

BRIEF DESCRIPTION OF DRAWINGS

Fig. 1 is a schematic diagram showing an outline of the why-question answering system training device in accordance with an embodiment of the present invention.
Fig. 2 is a block diagram showing a schematic configuration of the why-question answering system shown in Fig. 1.
Fig. 3 illustrates a procedure for generating a pair consisting of a question and an expected answer from a causality expression.
Fig. 4 is a block diagram of a question and expected answer generating/extracting unit generating a pair consisting of a question and an expected answer such as shown in Fig. 3 from a huge amount of causality relations extracted, for example, from Web documents storing a huge amount of documents.
Fig. 5 is a block diagram of a second filter learning unit for learning of a second filter unit that performs a question filtering process, used in the question and expected answer generating/extracting unit shown in Fig. 4.
Fig. 6 is a flowchart representing a control structure of a computer program when an iteration control unit 110 shown in Fig. 2 is realized by the cooperation of the computer hardware and the computer software. Fig. 7 is a flowchart representing a control structure of computer program realizing an answer candidate filtering unit, an answer candidate determining unit, and training data generating/labeling unit shown in Fig. 2.

Fig. 8 is a graph showing performance of a classifier trained by the training system in accordance with an embodiment of the present invention in comparison with the conventional art.

Fig. 9 is a block diagram showing a configuration of computer hardware necessary for realizing the embodiment of the present invention by a computer.

DESCRIPTION OF EMBODIMENTS

In the following description and in the drawings, the same components are denoted by the same reference characters. Therefore, detailed description thereof will not be repeated.

[Outline]

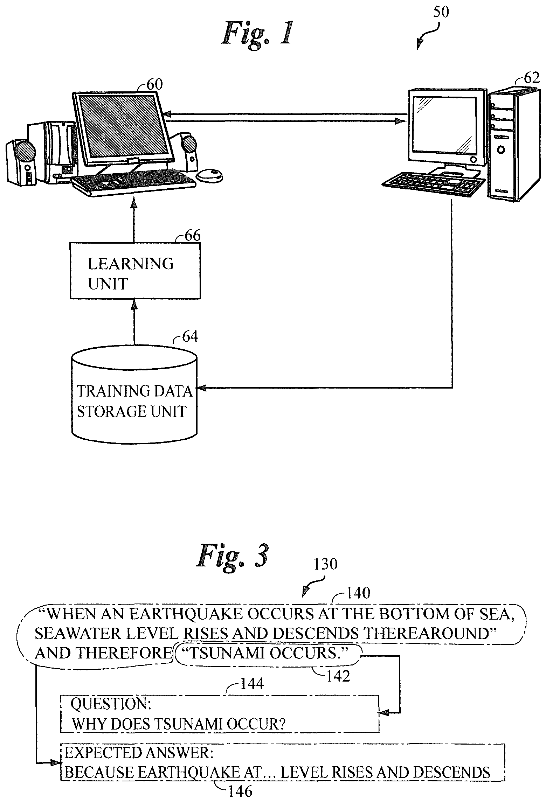

Fig. 1 schematically shows an outline of a training system 50 for training a why-question answering system in accordance with an embodiment of the present invention. Referring to Fig. 1, training system 50 includes a training device 62 for automatically recognizing such a type of question that the conventional why-question answering system 60 described above is not very good at addressing, finding an answer to such a question, automatically preparing training data for enhancing the performance of the classifier, and storing it in a training data storage unit 64. Through learning by learning unit 66 using the training data stored in training data storage unit 64, the performance of why-question answering system 60 is improved.

[Configuration]

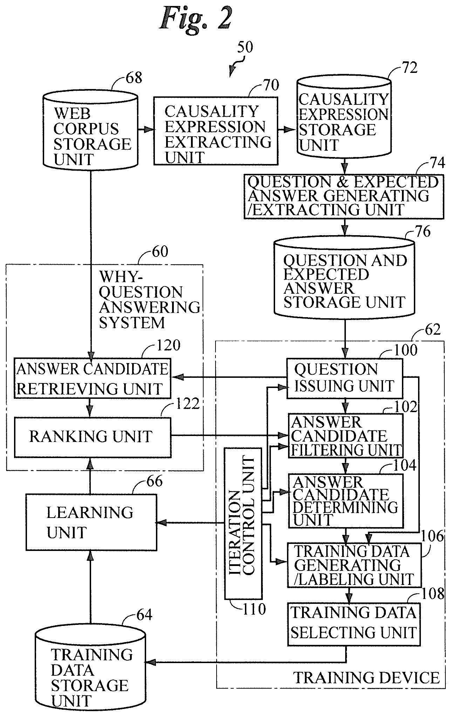

Fig. 2 shows a specific configuration of training system 50. Referring to Fig. 2, training system 50 includes: a web corpus storage unit 68 for storing a web corpus consisting of a huge amount of documents collected from the Web; a causality expression extracting unit 70 for extracting a huge amount of causality expressions from a huge amount of documents stored in web corpus storage unit 68; and a causality expression storage unit 72 for storing the causality expressions extracted by causality expression extracting unit 70. It is noted that in addition to the technique disclosed in Patent Literature 1 described above, a technique disclosed in Patent Literature 2 may be used for extracting the causality expressions.

Training system 50 further includes: a question and expected answer generating/extracting unit 74 for generating questions appropriate for generating training data and their expected answers from the huge amount of causality expressions stored in causality expression storage unit 72, and outputting them; a question and expected answer storage unit 76 for storing the questions and expected answers output from question and expected answer generating/extracting unit 74; and the above-described training device 62 applying sets of questions and expected answers stored in question and expected answer storage unit 76 to why-question answering system 60, generating such training data that improves the performance of why-question answering system 60 by using their answers, and storing them in a training data storage unit 64.

Fig. 3 shows a procedure of generating a question 144 and its expected answer 146 from a causality expression 130. There may be various causality expressions. For example, in a causality expression 130 shown in Fig. 3, a cause phrase 140 representing a cause is connected to a result phrase 142 representing a result by connecting words "and therefore." By transforming this result phrase 142 in accordance with prescribed transformation rules, a question 144 is obtained. An expected answer 146 to the question 144 is obtained from the cause phrase 140 also in accordance with prescribed transformation rules. By preparing sets of transformation rules in accordance with the forms of causality beforehand, it becomes possible to generate pairs of questions and expected answers from causality expressions.

Again referring to Fig. 2, why-question answering system 60 further includes: an answer candidate retrieving unit 120 for retrieving, from web corpus storage unit 68, a plurality of answer candidates to a given question; and a ranking unit 122 for scoring a huge amount of answer candidates retrieved by answer candidate retrieving unit 120 using a pre-learned classifier, and ranking them and outputting the results. Learning by learning unit 66 using the training data stored in training data storage unit 64 takes place in the classifier of ranking unit 122. Ranking unit 122 outputs each answer candidate with a score added. The score indicates likelihood of the answer to the question, added as a result of classification by the classifier. The answer candidates output by answer candidate retrieving unit 120 are a prescribed (in the present embodiment, 1200) number of passages having high tf-idf values with the question sentence, among the documents stored in web corpus storage unit 68. In the present embodiment, in order to enable efficient search of answer candidates from a huge amount of documents by why-question answering system 60, the following approach is adopted. Specifically, from among the documents stored in web corpus storage unit 68, passages consisting of seven continuous sentences and including at least one cue phrase for recognizing causality as used in an article by Oh (Jong-Hoon Oh, Kentaro Torisawa, Chikara Hashimoto, Motoki Sano, Stijn De Saeger, and Kiyonori Ohtake. 2013. Why-question answering using intra- and inter-sentential causal relations.

In Proceedings of the 51st Annual Meeting of the Association for Computational Linguistics, pages 1733-1743.) are extracted, and the scope of searching of answer candidates by why-question answering system 60 is limited such that the candidates are retrieved from the set of these passages. It is noted that the number of sentences in a passage is not limited to seven, and it may be selected from the range of about five to about ten.

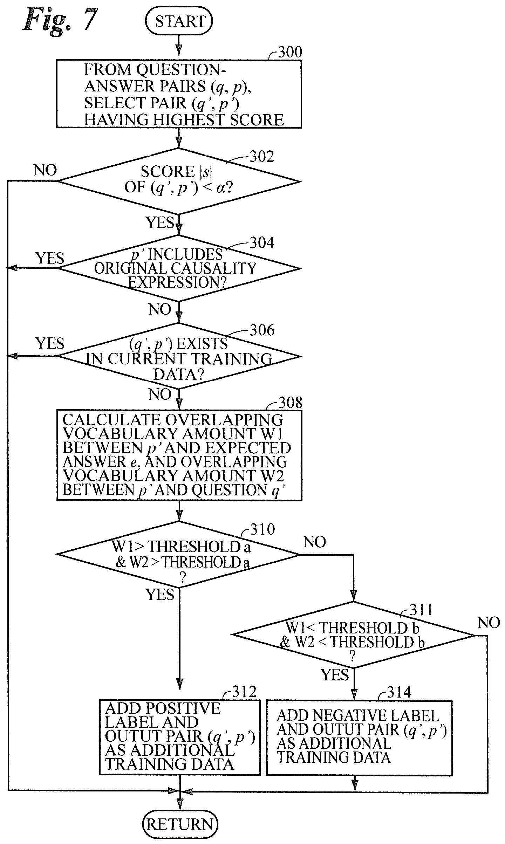

Training device 62 includes: a question issuing unit 100 for selecting a question from a large number of question and expected answer pairs stored in question and expected answer storage unit 76 and issuing the question to answer candidate retrieving unit 120; and an answer candidate filtering unit 102 filtering the ranked answer candidates transmitted from why-question answering system 60 in response to the question issued by question issuing unit 100 to retain only those answer candidates which satisfy a prescribed condition. The function of answer candidate filtering unit 102 will be described later with reference to Fig. 7.

Training device 62 further includes: an answer candidate determining unit 104 for determining, for each of the answer candidates output from answer candidate filtering unit 102, whether the answer candidate is correct or not by comparing an expected answer forming a pair with the question issued by question issuing unit 100, and outputting the result of determination; a training data generating/labeling unit 106 for adding the result of determination output from answer candidate determining unit 104 as a label to the pair of question and answer candidate, and thereby preparing a training data candidate; a training data selecting unit 108 for storing training data candidates output from training data generating/labeling unit 106, selecting, when generation of training data candidates for all causality expressions included in question and expected answer generating/extracting unit 74 is completed, a prescribed number (K) of training data candidates having the highest scores added by ranking unit 122 from the training data candidates, and adding these as training data to training data storage unit 64; and an iteration control unit 110 for controlling question issuing unit 100, answer candidate filtering unit 102, answer candidate determining unit 104, training data generating/labeling unit 106 and training data selecting unit 108 such that processes of these units are repeated until a prescribed end condition is satisfied.

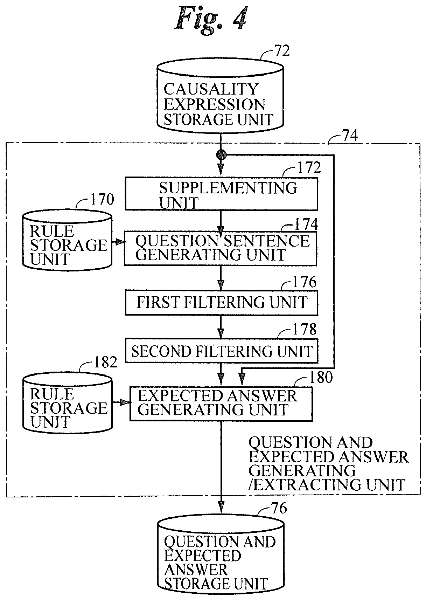

Fig. 4 shows a configuration of question and expected answer generating/extracting unit 74 shown in Fig. 2. Referring to Fig. 4, question and expected answer generating/extracting unit 74 includes: a supplementing unit 172, if a result portion of causality expression stored in causality expression storage unit 72 lacks information for generating a question sentence, for supplementing such information; a rule storage unit 170 for storing manually prepared rules for generating question sentences from result phrases of causality; and a question sentence generating unit 174 for selecting and applying, an applicable rule among the rules stored in rule storage unit 170 to every result phrase of causality expressions stored in causality expression storage unit 72 that is supplemented by supplementing unit 172, and thereby generating and outputting a question sentence.

Here, the process by supplementing unit 172 will be discussed. It is often the case that a result phrase part of causality expression has an anaphora to another part (reference to another part), or lacks an argument required by a predicate. As a result, subjects are often missing or topics are often omitted in the result parts. If these result parts are used in generating question sentences, good training data would not be obtained. Therefore, supplementing unit 172 supplements such subjects and topics from other parts of causality expressions.

Question and expected answer generating/extracting unit 74 further includes: a first filtering unit 176 for filtering out those of the question sentences output from question sentence generating unit 174 which include pronouns, and outputting others; a second filtering unit 178 for filtering out those of the question sentences output from the first filtering unit 176 which lack arguments related to predicates, and outputting others; a rule storage unit 182 storing transformation rules for generating expected answers from cause portions of causal expressions; and an expected answer generating unit 180 for applying a transformation rule stored in rule storage unit 182 to a cause part of a causality expression from which a question output from the second filtering unit 178 is obtained, thereby generating an expected answer to the question, forming a pair with the question and storing the result in question and expected answer storage unit 76.

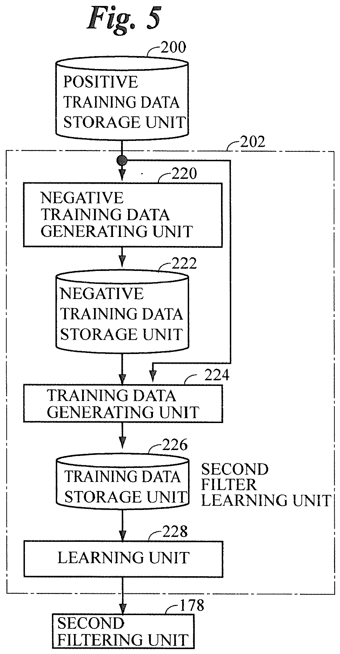

The process by the second filtering unit 178 shown in Fig. 4 is performed using a machine-learned discriminator. Referring to Fig. 5, learning of the second filtering unit 178 is realized by a second filter learning unit 202. For this learning, examples of self-contained examples of "why-question" are stored as positive examples in positive training data storage unit 200. In the present embodiment, 9,500 "why-questions" as the positive examples are manually prepared. As the second filtering unit 178, a subset tree kernel implemented in SVM-Light (T. Joachims. 1999. Making large-scale SVM learning practical. In B. Schoelkopf, C. Burges, and A. Smola, editors, Advances in Kernel Methods - Support Vector Learning, chapter 11, pages 169-184. MIT Press, Cambridge, MA.) was used. This subset kernel was trained using the following combination of trees and vectors.

- Subset trees of a phrase tree
- Subset trees having nouns replaced by corresponding word classes
- Vectors represented by morphemes- and POS tag-n grams

The second filter learning unit 202 includes: a negative training data generating unit 220 for automatically generating negative training data by deleting subject or object or both in each question sentence of positive training data stored in positive training data storage unit 200; a negative training data storage unit 222 for storing the negative training data generated by negative training data generating unit 220; a training data generating unit 224 for generating a training data set by merging the positive training data stored in positive training data storage unit 200 and the negative training data stored in negative training data storage unit 222, extracting prescribed features from each question sentence and adding labels of positive/negative examples; a training data storage unit 226 for storing the training data generated by training data generating unit 224; and a learning unit 228 for training second filtering unit 178 using the training data stored in training data storage unit 226. In the present embodiment, training data of 16,094 negative examples were generated from the training data of 9,500 positive examples and, therefore, the number of samples of the training data was 25,594 in total.

Training data generating unit 224 generated the training data by performing dependency analysis of each question sentence by using a Japanese dependency perser (J. DepP), and by converting the resulting dependency tree to a phrase tree. For this conversion, the following simple rule was used. In a dependency tree, if a main word of each BUNSETSU is a noun, NP (noun phrase) is added, if it is a verb or adjective, VP, and otherwise OP is added, respectively, as a parent node to each BUNSETSU of the dependency tree and thereby converting the tree to a phrase tree. From the phrase tree, features of the above-mentioned subset trees were extracted.

Again referring to Fig. 2, the functions of iteration control unit 110 shown in Fig. 2 will be described. Iteration control unit 110 has a function of iteratively causing question issuing unit 100, answer candidate filtering unit 102, answer candidate determining unit 104, training data generating/labeling unit 106 and training data selecting unit 108 shown in Fig. 2 to operate until a prescribed end condition is satisfied. Iteration control unit 110 can be realized by computer hardware and computer software.

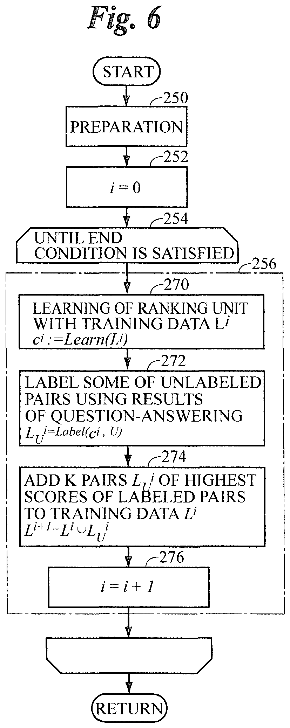

Referring to Fig. 6, a program realizing iteration control unit 110 includes: a step 250 of performing, after activation, a preparation process such as getting memory area allocation and instantiation of objects; a step 252 of setting an iteration control variable i to 0; and a step 254 of iterating the following process 256 until an end condition related to the variable i is satisfied (specifically, until the variable i reaches a prescribed upper limit). In the following description, in order to indicate that the data is of i-th iteration, a suffix i is appended on the right shoulder of each sign.

In the following description, a question given from question issuing unit 100 to why-question answering system 60 is represented by q, an expected answer to the question q is represented by e, and a plurality of answer candidates (specifically, twenty candidates) returned from why-question answering system 60 to the question q are represented as $p_j$($j$ = 1 to 20). Each answer candidate has a ranking score s provided by ranking unit 122. In the present embodiment, ranking unit 122 is realized by SVM and, therefore, an absolute value of score s represents a distance from a decision boundary of SVM to the answer candidate. If this distance is small, it means that the answer has low degree of reliability and if it is large, it has high degree of reliability. Among pairs of question q and answer candidate $p_j$, the pair having the highest score s is represented as (q', p'). Further, training data of i-th iteration is represented as $L^i$, and a classifier at the ranking unit 122 trained by the training data $L^i$ is represented as $c^i$. Such a pair not yet having the label of positive or negative example will be referred to as an unlabeled pair.

The process 256 includes a step 270 where learning unit 66 trains classifier $c^i$ at ranking unit 122 shown in Fig. 2 with the training data $L^i$ stored in training data storage unit 64 shown in Fig. 2. The process 256 further includes, after step 270, a step 272 of giving each question sentence stored in question and expected answer storage unit 76 to answer candidate retrieving unit 120, and in accordance with a response transmitted from ranking unit 122 as a result, labels those of the unlabeled pairs each consisting of a question and an expected answer appropriate as training data, as positive or negative examples. Process step 272 will be detailed later with reference to Fig. 7.

To a question q, a plurality of (twenty in the present embodiment) answer candidates are transmitted from ranking unit 122 to answer candidate filtering unit 102. A triplet (q, e, $p_j$) consisting of a question q, an expected answer e and an answer candidate $p_j$($j$ = 1 to 20) from ranking unit 122 is represented by U, and a data set obtained by the process at step 272 for one question q is given as $L_U^i$. Then, $L_U^i$ = Label ($c^i$, U) holds. At step 272, this process is executed on every question and expected answer pair stored in question and expected answer storage unit 76.

The process 256 further includes a step 274 of adding K pairs having the highest scores of all the labeled pairs $L_U^i$ obtained at step 272 for all the questions to the training data $L^i$ and thereby generating new training data $L^{i+1}$; and a step 276 of adding 1 to the variable i and ending the process 256.

Referring to Fig. 7, the program realizing the step 272 shown in Fig. 6 includes: a step 300 of selecting a pair (q', p') having the highest score s among unlabeled pairs (q, $p_j$) comprised of the question q given from question issuing unit 100 to why-question answering system 60 and each of the twenty answer candidates $p_j$ transmitted from why-question answering system 60 in response to the question q; and a step 302 of determining whether or not the absolute value of score s of the pair (q', p') selected at step 300 is smaller than a prescribed threshold value α (>0) or not, and if the determination is negative, ending execution of this routine with no further processing. Thus, in the present embodiment, if one of the answer candidates has the highest score s and its value is smaller than the threshold value α, it is determined that the answer by the why-question answering system 60 is unreliable, and training data for this example will be added to complement a weak point of system 60.

The program further includes: a step 304 of determining, if the determination at step 302 is positive, whether or not an answer candidate p' includes the original causality expression from which the question q' has been derived, and if the determination is positive, ending execution of this routine; and a step 306 of determining, if the determination at step 304 is negative, whether or not the pair (q', p') exists among the current training data, and if the determination is positive, ending execution of the routine. The determination at step 304 is made in order to prevent addition of excessive bias to the passages from which the causality expression is obtained. The determination at step 306 is made in order to prevent addition of accumulative example to the training data.

The program further includes: a step 308 of calculating, if the determination at step 306 is negative, an overlapping vocabulary amount W1 between the answer candidate p' and the expected answer e' to the question q' as well as an overlapping vocabulary amount W2 between the answer candidate p' and the question q'; a step 310 of determining whether or not the overlapping vocabulary amount W1 and the overlapping vocabulary amount W2 calculated at step 308 are both larger than a prescribed threshold value a, and branching the flow of control depending on the result of determination; a step 312 of labeling, if the determination at step 310 is positive, the pair (q', p') as a positive example and outputting as additional training data, and ending execution of this routine; a step 311 of determining, if the determination at step 310 is negative, whether the overlapping vocabulary amount W1 and the overlapping vocabulary amount W2 are both smaller than a prescribed threshold value b (b < a) and branching the flow of control depending on the result of determination; and a step 314 of labeling, if the determination at step 311 is positive, the pair (q', p') as a negative example and outputting as additional training data, and ending execution of this routine. If the determination at step 311 is negative, the routine ends without any further processing.

The expected answer e' is obtained from the cause portion of the causality expression from which the question q' is derived. Therefore, the expected answer e' is considered to be relevant as an answer to the question q'. If the overlapping vocabulary amount between expected answer e' and answer candidate p' is large, the answer candidate p' is considered to be a suitable answer to the question q'. Generally, the overlapping vocabulary amount Tm (e, p) between an expected answer e and an answer candidate p is calculated by the following equation.

$$Tm(e, p) = \max_{s \in S(p)} \frac{|T(e) \cap T(s)|}{|T(e)|} \qquad (1)$$

Here, T(x) represents a set of content words (nouns, verbs, and adjectives) included in a sentence x, and S(p) is a set of two continuous sentences in a passage forming the answer candidate p.

In the example above, at step 310, the overlapping vocabulary amounts W1 and W2 are both compared with the same threshold value a. The present invention, however, is not limited to such an embodiment. The overlapping vocabulary amounts W1 and W2 may be compared with threshold values different from each other. The same is true for the threshold value b compared with the overlapping vocabulary amounts W1 and W2 at step 311. The overlapping vocabulary amounts W1 and W2 may be compared with threshold values different from each other.

Further, at steps 310 and 311, it is determined that the overall condition is satisfied if two conditions are both satisfied. The overall condition, however, may be determined to be satisfied if either of the two conditions is satisfied.

[Operation]

The training system 50 operates in the following manner. Referring to Fig. 2, a large number of documents are collected in advance in a web corpus storage unit 68. Answer candidate retrieving unit 120 ranks passages from web corpus storage unit 68 seemingly suitable as answer candidates for each given question by tf-idf, extracts only a prescribed number (in the present embodiment, 1200) of these passages having the highest tf-idf and applies them to ranking unit 122. Training data storage unit 64 has initial training data stored therein. Causality expression extracting unit 70 extracts a large number of causality expressions from web corpus storage unit 68, and stores them in causality expression storage unit 72. Question and expected answer generating/extracting unit 74 extracts sets of questions and their answers from the large number of causality expressions stored in causality expression storage unit 72, and stores them in question and expected answer storage unit 76.

Referring to Fig. 4, here, question and expected answer generating/extracting unit 74 operates in the following manner. First, supplementing unit 172 shown in Fig. 4 detects, for each of the causality expressions stored in causality expression storage unit 72, an anaphora relation, an omission and the like and supplements such an anaphora relation or an omission and thereby supplements portions (subject, topic etc.) missing particularly in the result portion of the causality expressions. Question sentence generating unit 174 refers to rule storage unit 170 and applies an appropriate transformation rule to the result portion of a causality expression, and thereby generates a why-question. The first filtering unit 176 filters out those of the question sentences generated by question sentence generating unit 174 which include pronouns, and outputs others to the second filtering unit 178. The second filtering unit 178 filters out questions missing indispensable arguments of predicates, and applies others to expected answer generating unit 180. Expected answer generating unit 180 applies the transformation rule or rules stored in rule storage unit 182 to the cause portion of the causality expression from which the question output from the second filtering unit 178 derives, and thereby generates an expected answer to the question, forms a pair with the question and stores it in expected answer storage unit 76.

Prior to this operation, it is required that the second filtering unit 178 is trained by the second filter learning unit 202 shown in Fig. 5. Referring to Fig. 5, negative training data generating unit 220 automatically generates negative training data by deleting subject or object or both in each question sentence of positive training data stored in positive training data storage unit 200. The negative training data thus generated is stored in negative training data storage unit 222. Training data generating unit 224 merges the positive examples stored in positive training data storage unit 200 and the negative examples stored in negative training data storage unit 222, and generates training data for the second filtering unit 178. The training data is stored in training data storage unit 226. Learning unit 228 performs learning of second filtering unit 178 using the training data.

Then, ranking unit 122 of why-question answering system 60 is trained by the iteration of the following process.

Referring to Fig. 2, first, under the control by iteration control unit 110, learning unit 66 performs learning of ranking unit 122 using the initial training data stored in training data storage unit 64. Thereafter, iteration control unit 110 controls question issuing unit 100 such that questions q stored in question and expected answer storage unit 76 are successively selected and applied to answer candidate retrieving unit 120. Answer candidate retrieving unit 120 ranks passages from web corpus storage unit 68 suitable as answer candidates to each given question in accordance with tf-idf, extracts only a prescribed number (in the preset embodiment, 1200) of passages having the highest tf-idf, and applies them to ranking unit 122. Ranking unit 122 extracts prescribed features from each passage, scores them using the classifier trained by learning unit 66, selects the highest twenty, and transmits them with scores to answer candidate filtering unit 102.

Receiving the answer candidates, answer candidate filtering unit 102 selects, from question-answer candidate pairs (q, $p_j$) (j = 1 to 20), a pair (q', p') having the answer candidate p' of the highest score s (Fig. 7, step 300), and if the score is not smaller than the threshold value $\alpha$ (NO at step 302), discards this pair and the process proceeds to the next question. If the score is smaller than the threshold value $\alpha$ (YES at step 302), next, whether or not the answer candidate p' includes the causality expression from which the question q' is derived is determined (step 304). If the determination is positive (YES at step 304), the process for this question ends, and the process proceeds to the next question. If the determination is negative (NO at step 304), whether or not the pair (q', p') exists in the current training data is determined at step 306. If the determination is positive (YES at step 306), the process for this question ends and the process proceeds to the next question. If the determination is negative (NO at step 306), at step 308 the overlapping vocabulary amount W1 between the answer candidate p' and the expected answer e and overlapping vocabulary amount W2 between the answer candidate p' and the question q' are calculated in accordance with Equation (1), respectively.

Thereafter, at step 310, whether the overlapping vocabulary amounts W1 and W2 are both larger than the prescribed threshold value a is determined. If the determination is positive, the pair (q', p') is labeled as a positive example, and the pair is output as additional training data. If the determination is negative, the control proceeds to step 311. At step 311, whether or not the overlapping vocabulary amounts W1 and W2 are both smaller than the prescribed threshold value b (b < a) is determined. If the determination is positive, the pair (q', p') is labeled as a negative example and the pair is output as additional training data. If the determination is negative, this process ends without any further processing.

When the process related to the questions and expected answers stored in question and expected answer storage unit 76 shown in Fig. 2 ends in this manner, training data selecting unit 108 is storing the new training data having labels of positive/negative examples selected by the training device 62. Training data selecting unit 108 selects, from the new training data, K examples having the highest scores and add them to training data storage unit 64.

Iteration control unit 110 adds 1 to iteration variable i (step 276 of Fig. 6), and determines whether or not the end condition is satisfied. If the end condition is not yet satisfied, learning unit 66 again trains ranking unit 122 under the control of iteration control unit 110, using the updated training data stored in training data storage unit 64. Thus, the classifier of ranking unit 122 has come to be enhanced by the learning with the training data obtained by the causality expressions stored in causality expression storage unit 72.

When the iteration end condition is satisfied, the iteration described above ends, and ranking unit 122 improved by the training data obtained by using the causalities stored in causality expression storage unit 72 is obtained. As a result, the precision of response by why-question answering system 60 becomes higher.

[Experiments]

In order to verify the effects of the above-described embodiment, an experimental set including 850 why-questions in Japanese and top-twenty answer candidates for each of the questions extracted from 6 hundred millions of Japanese Web pages was prepared. The experimental data set was obtained by a question answering system proposed by Murata et al. (Masaki Murata, Sachiyo Tsukawaki, Toshiyuki Kanamaru, Qing Ma, and Hitoshi Isahara. 2007. A system for answering non-factoid Japanese questions by using passage retrieval weighted based on type of answer. In Proceedings of NTCIR-6). For each of these, whether or not it is a correct question-answer pair was examined manually. In the experiment, the experimental data set was divided into a training set, a development set and a test data set. The training set consists of 15,000 question-answer pairs. The remaining 2,000 experimental data consists of 100 questions and answers to the questions (20 for each question), which was divided equally to the development set and the test set.

Using the training data described above as the initial training data, iterative training of ranking unit 122 was done. The development set was used to determine the threshold value $\alpha$, the threshold value $\beta$ for the overlapping vocabulary amount, and the number K of new data to be added to the training data at each iteration. Experiments were done using the development data to find a combination of $\alpha$, $\beta$ and K that satisfies the relation of $\alpha \in \{0.2, 0.3, 0.4\}$, $\beta \in \{0.6, 0.7, 0.8\}$ and $K \in \{150, 300, 450\}$. The best result was obtained with the combination of $\alpha = 0.3$, $\beta = 0.7$ and K = 150. In the experiment described in the following, this combination of $\alpha$, $\beta$ and K was used. The number of iteration was set to 40. This is because the training data for the development set using this combination of $\alpha$, $\beta$ and K converged around this number of iteration. Evaluation was done using the test set.

In the experiment, based on six-hundred fifty-six million causality expressions automatically extracted from a web corpus storing two billion documents, 1/60 thereof, that is, eleven million (11,000,000) causal expressions, were selected. From these, combinations of self-contained questions and expected answers were selected, of which number was 56,775. These questions were input to why-question answering system 60, highest ranking twenty answer candidates for each question were received, and using these, unlabeled question-answer candidate pairs (unlabeled pairs) were generated.

For comparison, first, 100,000 causal expressions were extracted at random from the eleven million causal expressions described above. Questions were generated from all of these, and unlabeled pairs were generated and used for all.

These two types were referred to as $U_{SC}$ (unlabeled pairs generated only from self-contained questions) and $U_{All}$ (unlabeled pairs generated from questions including self-contained questions and others) and distinguished from each other. $|U_{SC}| = 514,674$, $|U_{All}| = 1,548,998$, $|U_{SC} \cap U_{All}| = 17,844$.

The table below shows the results of comparison.

Table 1

|  | P@1 | MAP |
|---|---|---|
| OH | 42 | 46.5 |
| AtOnce | 42 | 45.4 |
| Ours($U_{All}$) | 34 | 41.7 |
| Ours($U_{SC}$) | 50 | 48.9 |
| UpperBound | 66 | 66 |

"OH" represents those trained by the initial training data.

"AtOnce" represents performance when all labeled data obtained by the first iteration of the embodiment were added to the training data. By comparing this result with "Ours($U_{SC}$)", which will be described later, the effect of iteration becomes clear.

"Ours($U_{All}$)" represents the result when $U_{All}$ mentioned above was used as unlabeled pairs, in a modification of the embodiment. By comparing with "Ours($U_{SC}$)", the high efficiency of the present embodiment attained by using only the self-contained questions becomes clear.

"Ours($U_{SC}$)" represents the result of the above-described embodiment.

"UpperBound" represents a system in which a correct answer to every question is always found in the highest n answer candidates, if only n correct answers exist in the test set. This result shows the upper limit of performance of the experiment. In every system other than UpperBound, linear kernel TinySVM was used for classifier learning. Evaluation was done using the precision of top-answer by systems (P@1) and mean average precision (MAP). P@1 indicates how many correct answers can be obtained among the top-answers provided by the system. Mean average precision represents the overall quality of the top-20 answers.

Table 1 shows the result of the evaluation. As can be seen from Table 1, neither AtOnce nor Ours($U_{All}$) could exceed the result of OH. The embodiment of the invention (Ours($U_{SC}$)) stably attained results better than OH both in P@1 and MAP. This indicates that the result of iteration of the embodiment is significant in improving performance, and that use of only the self-contained questions is significant in improving performance. Further, when we compare P@1 of Ours($U_{SC}$) with UpperBound, the result is 75.7%. Thus, we can conclude that a correct answer to a why-question can be found with high precision in accordance with the present embodiment, provided that there is an answer retrieving module that can retrieve at least one correct answer from the Web.

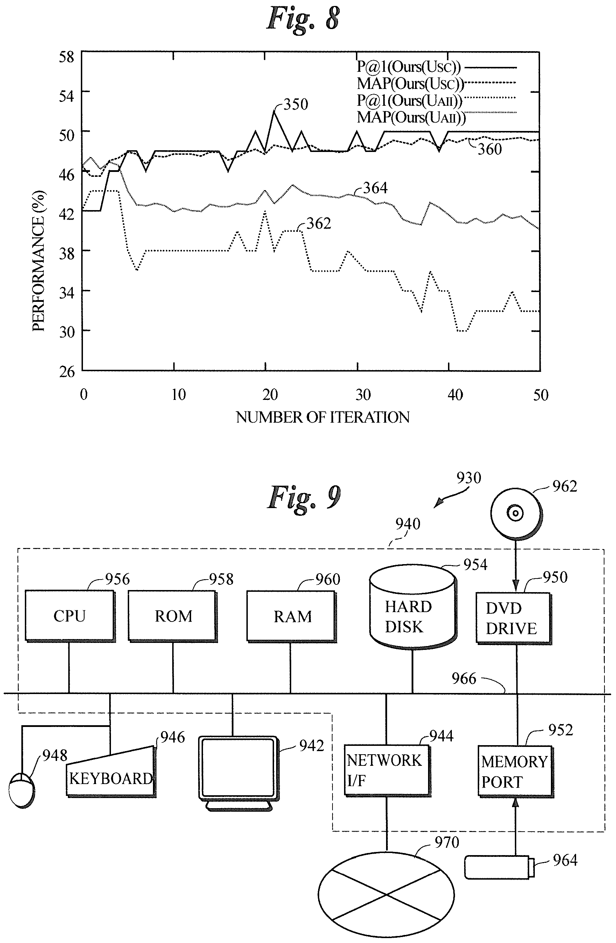

Fig. 8 shows a relation between the number of iterations and precision, in Ours($U_{All}$) and Ours($U_{SC}$), with the number of iterations being 0 to 50. In Ours($U_{SC}$) in accordance with the embodiment of the present invention, after the 50 iterations of learning, the precision reached 50% and 49.2%, respectively, in P@1 (graph 350) and MAP (graph 360). In P@1, the value converged after 38 times of iterations. Though Ours($U_{All}$) (graph 362 for P@1, graph 364 for MAP) exhibited higher performances than Ours($U_{SC}$) in the first few iterations, the performance relatively degraded as the number of iterations increased. A possible reason for this is that questions other than the self-contained questions served as noises and had a bad influence on the performance.

Table 2

|  | P@1 | P@3 | P@5 |
|---|---|---|---|
| OH | 43.0 | 65.0 | 71.0 |
| OURS($U_{SC}$) | 50.0 | 68.0 | 75.0 |

Further, the performance of the question answering system (Ours($U_{SC}$)) trained by the device in accordance with the embodiment above was compared with the question answering system (OH) trained using only the initial training data. The object of learning was the classifier of ranking unit 122 of both question answering systems. The experiment was to obtain the highest ranking five answer passages to each of a hundred questions of the development set. Three evaluators evaluated these question-answer pairs and determined whether each is correct or not by majority vote. Evaluation was done by P@1, P@3 and P@5. Here, P@ N means the ratio of the correct answers existing in top N answer candidates. Table 2 shows the results.

It can be seen from Table 2 that the present embodiment attained better results than OH in all evaluations P@1, P@3 and p@5.

[Effects of the Embodiment]

As described above, according to the present embodiment, a large number of causality expressions are extracted from a huge amount of documents stored in web corpus storage unit 68. From the causality expressions, a large number of pairs of questions q and expected answers e are selected. From each of the selected pairs, the question q is given to why-question answering system 60, and a plurality of answer candidates p($p_1$ to $p_{20}$) to the question are received from why-question answering system 60. Each answer candidate $p_j$ has a score s added by the classifier of ranking unit 122, which is the object of training of the present system. A pair (q', p') of the answer candidate having the highest score and the question is selected, and the answer candidate is adopted only when the pair satisfies the following conditions.

(1) The score s of answer candidate p' is smaller than the threshold value $\alpha$ (> 0).
(2) The answer candidate p' does not include the causality expression from which the question q' derives.
(3) The pair (q', p') does not exist in the current training data.

From the pairs (q', p') which satisfy these conditions, only K pairs of which score of overlapping vocabulary amount is high are added to the training data. Here, based on the overlapping vocabulary amount of expected answer e' to the question q' and the answer candidate p', whether or not the pair is a positive example or negative example is determined, and according to the result of determination, a flag indicating positive or negative example is added to the training data. Therefore, data of which reliability of determination was low by the original ranking unit 122 will be added intensively. By repeating such learning for a prescribed number of times on all the obtained causality expressions, training data related to weak portions of low reliability can be expanded. Though it is necessary to manually prepare the initial training data for the classifier of the question answering system, the training data to be added does not require any manual labor, and a large amount of training data can be generated efficiently at a small cost. As a result, the precision of the classifier in ranking unit 122 trained by the training data can be improved without human labor.

In the embodiment described above, question and expected answer storage unit 76 stores pairs of questions and expected answers automatically generated from the causality expressions extracted from a huge amount of documents stored in web corpus storage unit 68. The present invention, however, is not limited to such an embodiment. The pairs of questions and expected answers to be stored in question and expected answer storage unit 76 may come from any source. Further, not only the automatically generated pairs but also manually formed questions and automatically collected expected answers may be stored in question and expected answer storage unit 76.

Further, in the embodiment above, the iteration by answer candidate retrieving unit 120 is terminated when the number of iterations reaches the upper limit. The present invention, however, is not limited to such an embodiment. For example, the iteration may be terminated when there is no longer any new training data to be added to training data storage unit 64.

Further, in the embodiment above, at step 300 of Fig. 7, only one pair having the highest score is selected. The present invention, however, is not limited to such an embodiment. Two or more prescribed number of pairs having the highest scores may be selected. In that case, the process from steps 302 to 314 is performed on each of the pairs separately.

[Computer Implementation]

The training device 62 in accordance with the embodiments above can be implemented by computer hardware and computer programs executed on the computer hardware. Fig. 9 shows an internal configuration of computer system 930.

Referring to Fig. 9, computer system 930 includes a computer 940 having a memory port 952 and a DVD (Digital Versatile Disk) drive 950, a keyboard 946, a mouse 948, and a monitor 942.

Computer 940 includes, in addition to memory port 952 and DVD drive 950, a CPU (Central Processing Unit) 956, a bus 966 connected to CPU 956, memory port 952 and DVD drive 950, a read only memory (ROM) 958 storing a boot-up program and the like, and a random access memory (RAM) 960 connected to bus 966, storing program instructions, a system program and work data. Computer system 930 further includes a network interface (I/F) 944 providing computer 940 with the connection to a network allowing communication with another terminal (such as a computer realizing why-question answering system 60, training data storage units 64 and learning unit 66, or a computer realizing question and expected answer storage unit 76 shown in Fig. 2). Network I/F 944 may be connected to the Internet 970.

The computer program causing computer system 930 to function as each of the functioning sections of training device 62 in accordance with the embodiment above is stored in a DVD 962 or a removable memory 964 loaded to DVD drive 950 or to memory port 952, and transferred to hard disk 954. Alternatively, the program may be transmitted to computer 940 through a network I/F 944, not shown, and stored in hard disk 954. At the time of execution, the program is loaded to RAM 960. The program may be directly loaded from DVD 962, removable memory 964 or through network I/F 944 to RAM 960.

The program includes a plurality of instructions to cause computer 940 to operate as functioning sections of training device 62 in accordance with the embodiment above. Some of the basic functions necessary to realize the operation are provided by the operating system (OS) running on computer 940, by a third party program, or by a module of various programming tool kits installed in computer 940. Therefore, the program may not necessarily include all of the functions necessary to realize the training device 62 in accordance with the present embodiment. The program has only to include instructions to realize the functions of the above-described system by calling appropriate functions or appropriate program tools in a program tool kit in a manner controlled to attain desired results. The operation of computer system 930 is well known and, therefore, description thereof will not be given here.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

INDUSTRIAL APPLICABILITY

The present invention is applicable to provision of question answering service contributing to companies and individuals related to researches, learning, education, hobbies, production, politics, economy and the like, by providing answers to why-questions.

REFERENCE SIGNS LIST

| | |
|---|---|
| 50 | training system |
| 60 | why-question answering system |
| 62 | training device |
| 64 | training data storage unit |
| 66 | learning unit |
| 68 | web corpus storage unit |
| 70 | causality expression extracting unit |
| 72 | causality expression storage unit |
| 74 | question and expected answer generating/extracting unit |
| 76 | question and expected answer storage unit |
| 100 | question issuing unit |
| 102 | answer candidate filtering unit |
| 104 | answer candidate determining unit |
| 106 | training data generating/labeling unit |
| 108 | training data selecting unit |
| 110 | iteration control unit |
| 120 | answer candidate retrieving unit |
| 122 | ranking unit |

**Claims**

1. A question answering system training device, used with causality expression storage means for storing a plurality of causality expressions, question and expected answer storage means for storing sets each including a question and an expected answer to the question extracted from one same causality expression stored in said causality expression storage means, and a question answering system outputting, upon reception of a question, a plurality of answer candidates to the question with scores, for improving performance of a classifier that scores the answer candidates in the question answering system, said training device being used also with a learning device including training data storage means for storing training data for said classifier of said question answering system; said training device comprising:

learning device control means controlling said learning device such that learning of said classifier is performed using the training data stored in said training data storage means; question issuing means issuing and giving to said question answering system a question stored in said question and expected answer storage means; training data adding means for generating training data for said classifier of said question answering system, from pairs of the question issued by said question issuing means and each of a plurality of answer candidates output with scores from said question answering system in response to said question, and adding the training data to said training data storage means; and iteration control means for controlling said learning device control means, said question issuing means, and said training data adding means such that control of said learning device by said learning data control means, issuance of a question by said question issuing means, and addition of said training data by said training data adding means are repeatedly executed for a prescribed number of times until a prescribed end condition is satisfied.

2.  The question answering system training device according to claim 1, wherein said training data adding means includes:

    answer candidate selecting means for selecting, from a plurality of answer candidates output with scores from said question answering system in response to a question issued by said question issuing means, a prescribed number of answer candidates having highest scores with absolute value of each score being smaller than a positive first threshold value; training data candidate generating means calculating degree of matching between each of said prescribed number of answer candidates selected by said answer candidate selecting means and said expected answer to said question, and depending on whether the degree of matching is larger than a second threshold value or not, labeling the answer candidate and the question as a positive example and a negative example, respectively, thereby for generating a training data candidate; and means for adding the training data candidate generated by said training data candidate generating means as new training data, to said training data storage means.

3.  The question answering system training device according to claim 2, wherein said training data adding means further includes first answer candidate discarding means provided between an output of said answer candidate selecting means and an input of said training data candidate generating means, for discarding, of the answer candidates selected by said answer candidate selecting means, an answer candidate obtained from a causality expression from which a question as a source of said answer candidate has been derived.

4.  The question answering system training device according to claim 2 or 3, wherein said training data adding means further includes second answer candidate discarding means provided between an output of said answer candidate selecting means and an input of said training data candidate generating means, for discarding, of pairs of said question and the answer candidates selected by said answer candidate selecting means, a pair that matches any pair stored in said training data storage means.

5.  The question answering system training device according to any of claims 1 to 4, wherein said question answering system extracts answer candidates from a set of passages, each passage being comprised of a plurality of sentences and including at least a cue phrase for extracting a causality expression.

6.  A computer program causing a computer to function as a question answering system training device, used with causality expression storage means for storing a plurality of causality expressions, question and expected answer storage means for storing sets of a question and an expected answer to the question extracted from one same causality expression stored in said causality expression storage means, and a question answering system outputting, upon reception of a question, a plurality of answer candidates to the question with scores, for improving performance of a classifier that scores the answer candidates in the question answering system; wherein said training device being used also with a learning device including training data storage means for storing training data for said classifier of said question answering system; the question and the expected answer forming said set are generated from the same causality expression; and said computer program causes the computer to function as various means forming the training device in accordance with any of claims 1 to 5.

## Fig. 1

50

60

62

LEARNING
UNIT

66

64

TRAINING DATA
STORAGE UNIT

## Fig. 3

130

140

"WHEN AN EARTHQUAKE OCCURS AT THE BOTTOM OF SEA, SEAWATER LEVEL RISES AND DESCENDS THEREAROUND" AND THEREFORE "TSUNAMI OCCURS."

142

144

QUESTION:
WHY DOES TSUNAMI OCCUR?

EXPECTED ANSWER:
BECAUSE EARTHQUAKE AT... LEVEL RISES AND DESCENDS

146

# Fig. 2

50

```
┌─────────────┐        ┌──────────────┐      ┌──────────────┐
│  68         │        │   70         │      │  72          │
│ WEB         │        │ CAUSALITY    │      │ CAUSALITY    │
│ CORPUS      │───────▶│ EXPRESSION   │─────▶│ EXPRESSION   │
│ STORAGE     │        │ EXTRACTING   │      │ STORAGE      │
│ UNIT        │        │ UNIT         │      │ UNIT         │
└─────────────┘        └──────────────┘      └──────────────┘
```

74
QUESTION & EXPECTED
ANSWER GENERATING
/EXTRACTING UNIT

76
QUESTION AND
EXPECTED
ANSWER
STORAGE UNIT

60
WHY-
QUESTION
ANSWERING
SYSTEM

120
ANSWER CANDIDATE
RETRIEVING UNIT

122
RANKING UNIT

62

100
QUESTION
ISSUING UNIT

102
ANSWER
CANDIDATE
FILTERING UNIT

104
ANSWER
CANDIDATE
DETERMINING
UNIT

ITERATION
CONTROL UNIT

106
TRAINING DATA
GENERATING
/LABELING UNIT

108
TRAINING DATA
SELECTING UNIT

110

66
LEARNING
UNIT

64
TRAINING
DATA
STORAGE
UNIT

TRAINING DEVICE

## Fig. 4

```
                        ┌──────────────┐ ⌐72
                        │  CAUSALITY   │
                        │  EXPRESSION  │
                        │ STORAGE UNIT │
                        └──────┬───────┘
                               │              ⌐74
   ┌───────────────────────────┼───────────────────────┐
   │                           ▼                        │
   │                  ┌────────────────┐ ⌐172           │
   │                  │  SUPPLEMENTING │                │
   │                  │  UNIT          │                │
   │  ┌─────────┐⌐170 └───────┬────────┘                │
   │  │ RULE    │             ▼         ⌐174            │
   │  │ STORAGE ├──►┌────────────────────┐              │
   │  │ UNIT    │   │ QUESTION SENTENCE  │              │
   │  └─────────┘   │ GENERATING UNIT    │              │
   │                └─────────┬──────────┘              │
   │                          ▼          ⌐176           │
   │                ┌─────────────────────┐             │
   │                │ FIRST FILTERING UNIT│             │
   │                └─────────┬───────────┘             │
   │                          ▼          ⌐178           │
   │                ┌──────────────────────┐            │
   │  ┌─────────┐⌐182│ SECOND FILTERING UNIT│           │
   │  │ RULE    │   └─────────┬────────┬───┘            │
   │  │ STORAGE ├──►┌─────────▼────────▼──┐ ⌐180        │
   │  │ UNIT    │   │ EXPECTED ANSWER     │             │
   │  └─────────┘   │ GENERATING UNIT     │             │
   │                └─────────┬───────────┘             │
   │                          │   QUESTION AND          │
   │                          │   EXPECTED ANSWER       │
   │                          │   GENERATING            │
   │                          │   /EXTRACTING UNIT      │
   └──────────────────────────┼────────────────────────┘
                              ▼
                    ┌──────────────┐ ⌐76
                    │ QUESTION AND │
                    │ EXPECTED     │
                    │ ANSWER       │
                    │ STORAGE UNIT │
                    └──────────────┘
```

## Fig. 5

```
                    ┌─200
        ┌──────────────────────┐
        │ POSITIVE             │
        │ TRAINING DATA        │
        │ STORAGE UNIT         │
        └──────────────────────┘
                                    ┌─202
    ┌─ ─ ─ ─ ─ ─│─ ─ ─ ─ ─ ─ ─ ─ ─ ─ ─ ─ ─┐
    │           ▼      ┌─220              │
    │   ┌──────────────────────┐          │
    │   │ NEGATIVE             │          │
    │   │ TRAINING DATA        │          │
    │   │ GENERATING UNIT      │          │
    │   └──────────────────────┘          │
    │           │                         │
    │           ▼      ┌─222              │
    │   ┌──────────────────────┐          │
    │   │ NEGATIVE             │          │
    │   │ TRAINING DATA        │          │
    │   │ STORAGE UNIT         │          │
    │   └──────────────────────┘          │
    │           │          ┌─ 224         │
    │           ▼          ▼              │
    │   ┌──────────────────────┐          │
    │   │ TRAINING DATA        │          │
    │   │ GENERATING UNIT      │          │
    │   └──────────────────────┘          │
    │           │      ┌─226              │
    │           ▼                         │
    │   ┌──────────────────┐  SECOND      │
    │   │ TRAINING DATA    │  FILTER      │
    │   │ STORAGE UNIT     │  LEARNING UNIT│
    │   └──────────────────┘              │
    │           │      ┌─228              │
    │           ▼                         │
    │   ┌──────────────────────┐          │
    │   │ LEARNING UNIT        │          │
    │   └──────────────────────┘          │
    └─ ─ ─ ─ ─ ─│─ ─ ─ ─ ─ ─ ─ ─ ─ ─ ─ ─ ─┘
                ▼      ┌─178
        ┌──────────────────────┐
        │ SECOND               │
        │ FILTERING UNIT       │
        └──────────────────────┘
```

# Fig. 6

START

PREPARATION ⟋250

$i = 0$ ⟋252

⟋254
UNTIL END
CONDITION IS SATISFIED
⟋256

⟋270
LEARNING OF RANKING UNIT
WITH TRAINING DATA $L^i$
$c^i := Learn(L^i)$

⟋272
LABEL SOME OF UNLABELED
PAIRS USING RESULTS
OF QUESTION-ANSWERING
$L_U^{\ i} = Label(c^i, U)$

⟋274
ADD K PAIRS $L_U^{\ i}$ OF HIGHEST
SCORES OF LABELED PAIRS
TO TRAINING DATA $L^i$
$L^{i+1} = L^i \cup L_U^{\ i}$

⟋276
$i = i + 1$

RETURN

*Fig. 7*  ( START )

FROM QUESTION-
ANSWER PAIRS $(q, p)$,
SELECT PAIR $(q', p')$
HAVING HIGHEST SCORE ⌐300

SCORE $|s|$
OF $(q', p') < \alpha$? ⌐302 — NO

YES

$p'$ INCLUDES
ORIGINAL CAUSALITY
EXPRESSION? ⌐304 — YES

NO

$(q', p')$ EXISTS
IN CURRENT TRAINING
DATA? ⌐306 — YES

NO

CALCULATE OVERLAPPING
VOCABULARY AMOUNT W1
BETWEEN $p'$ AND EXPECTED
ANSWER $e$, AND OVERLAPPING
VOCABULARY AMOUNT W2
BETWEEN $p'$ AND QUESTION $q'$ ⌐308

W1 > THRESHOLD a
& W2 > THRESHOLD a
? ⌐310 — NO

YES

W1 < THRESHOLD b
& W2 < THRESHOLD b
? ⌐311 — NO

YES

ADD POSITIVE
LABEL AND
OUTUT PAIR $(q', p')$
AS ADDITIONAL
TRAINING DATA ⌐312

ADD NEGATIVE LABEL
AND OUTUT PAIR $(q', p')$
AS ADDITIONAL
TRAINING DATA ⌐314

( RETURN )

## Fig. 8

## Fig. 9

## INTERNATIONAL SEARCH REPORT

| International application No. |
| --- |
| PCT/JP2016/074903 |

A. CLASSIFICATION OF SUBJECT MATTER

*G06F17/30(2006.01)i, G06N5/02(2006.01)i, G06N99/00(2010.01)i*

According to International Patent Classification (IPC) or to both national classification and IPC

B. FIELDS SEARCHED

Minimum documentation searched (classification system followed by classification symbols)
G06F17/30, G06N5/02, G06N99/00

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| P,X | Jong-Hoon Oh et al., A Semi-Supervised Learning Approach to Why-Question Answering, Proceedings of the Thirtieth AAAI Conference on Artificial Intelligence (AAAI-16)[online], 2016.02.17 [retrieval date 2016.09.07], pp. 3022-3029, Internet: <URL:www.aaai.org/ocs/index.php/AAAI/AAAI16/paper/view/12208/12056> | 1-6 |
| A | Jong-Hoon Oh et al., Why-Question Answering using Intra- and Inter-Sentential Causal Relations, Proceedings of the 51st Annual Meeting of the Association for Computational Linguistics[online], 2013.08.09[retrieval date 2016.09.07], pp. 1733-1743, Internet: <URL:https://www.aclweb.org/anthology/P13/P13-1170.pdf> | 1-6 |

| ☒ | Further documents are listed in the continuation of Box C. | ☐ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 08 September 2016 (08.09.16) | 20 September 2016 (20.09.16) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**INTERNATIONAL SEARCH REPORT**

International application No.

PCT/JP2016/074903

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2015-11426 A  (National Institute of Information and Communications Technology), 19 January 2015 (19.01.2015), entire text; all drawings & US 2016/0155058 A1    & WO 2014/208213 A1 & EP 3016002 A1        & CN 105393248 A & KR 10-2016-0026892 A | 1-6 |
| A | Ichiro YAMADA et al., "A Study on Extraction of Typical Sentence Structures Expressing Object Relations using a Semi-supervised Learning", FIT2008 (The 7th Forum on Information Technology) Koen Ronbunshu, 20 August 2008 (20.08.2008), separate vol.2, pages 167 to 168 | 1-6 |
| A | Tatsukuni INOUE et al., "Semi-Supervised Japanese Word Sense Disambiguation Based on Two-Stage Classification of Unlabeled Data and Ensemble Learning", Journal of Natural Language Processing, 28 June 2011 (28.06.2011), vol.18, no.3, pages 247 to 271 | 1-6 |
| A | David Yarowsky, Unsupervised Word Sense Disambiguation Rivaling Supervised Methods, ACL '95 Proceedings of the 33rd annual meeting on Association for Computational Linguistics [online], 1995[retrieval date 2016.09.07], pp. 189-196, Internet: <URL:http://www.aclweb.org/anthology/P95-1026> | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015011426 A

- JP 2013175097 A

**Non-patent literature cited in the description**

- **JONG-HOON OH ; KENTARO TORISAWA ; CHIKARA HASHIMOTO ; MOTOKI SANO ; STIJN DE SAEGER ; KIYONORI OHTAKE.** Why-question answering using intra- and inter-sentential causal relations. *In Proceedings of the 51st Annual Meeting of the Association for Computational Linguistics,* 2013, 1733-1743

- Making large-scale SVM learning practical. **T. JOACHIMS.** Advances in Kernel Methods - Support Vector Learning. MIT Press, 1999, 169-184
- **MASAKI MURATA ; SACHIYO TSUKAWAKI ; TOSHIYUKI KANAMARU ; QING MA ; HITOSHI ISAHARA.** A system for answering non-factoid Japanese questions by using passage retrieval weighted based on type of answer. *In Proceedings of NTCIR-6,* 2007